# FASCICULE DE BREVET EUROPEEN

(11) **EP 1 385 249 B1**
(45) Date de publication et mention de la délivrance du brevet: **31.08.2016**
(21) Numéro de dépôt: 03102253.6
(22) Date de dépôt: 22.07.2003
(51) Int. Cl.: H02H 3/28

(54) **Dispositif et procédé de protection contre les surintensités dans une armoire de distribution & xA;d'énergie électrique**
Vorrichtung und Verfahren zum Überstromschutz in einem elektrischen Energieverteilungsschrank
Device and method for overcurrent protection in an electric power distribution cabinet

(30) Priorité: 24.07.2002 FR 0209379
(43) Date de publication de la demande: 28.01.2004
(73) Titulaire: AIRBUS OPERATIONS, 31060 Toulouse (FR)
(72) Inventeur: VERGNAT, Sébastien, 31500, TOULOUSE (FR); FOCH, Etienne, 31000, TOULOUSE (FR)
(74) Mandataire: Ahner, Philippe

(56) Documents cités:
- US-A- 4 862 308
- US-A- 5 809 045

## Description

### DOMAINE TECHNIQUE

La présente invention concerne un dispositif et un procédé de protection contre les surintensités, dans une armoire de distribution d'énergie électrique, notamment dans le "coeur électrique" (en anglais "electric center" ou "electric core") d'un aéronef, qui permet de distribuer l'énergie électrique fournie par une ou plusieurs sources, par exemple des génératrices entraînées par les moteurs de cet aéronef, vers une pluralité de charges, telles que notamment des transformateurs, des moteurs...

### ETAT DE LA TECHNIQUE ANTERIEURE

Une armoire de distribution d'énergie électrique doit être dimensionnée et protégée pour ne pas être endommagée par des surintensités qui peuvent affecter son fonctionnement.

De telles surintensités peuvent notamment provenir d'un court-circuit, par exemple à la masse, localisé à l'intérieur de ladite armoire de distribution.

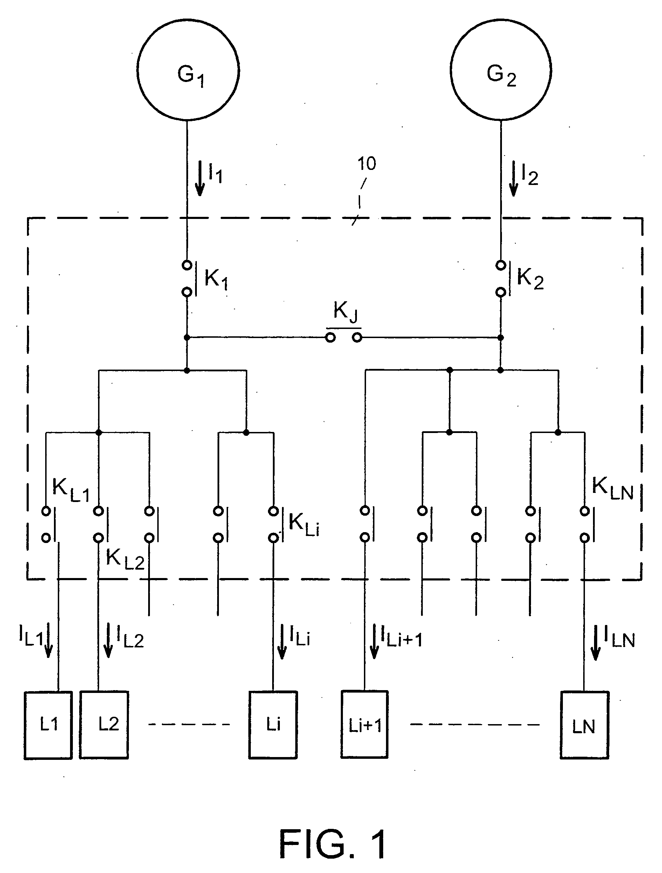

Dans un exemple de réalisation illustré sur la figure 1, une telle armoire de distribution d'énergie 10 électrique reçoit en entrée de l'énergie électrique fournie par deux génératrices G1 et G2. Elle répartit cette énergie vers des charges L₁ à L_{N} au moyen de lignes et de barres de distribution internes à ladite armoire. De façon classique, des contacteurs K₁, et K₂, commandés selon des lois de protection des courants entrants I₁ et I₂, permettent de limiter lesdits courants entrants provenant respectivement de ces génératrices G₁ et G₂. Ces lois de protection peuvent par exemple, mais pas nécessairement, être similaires à la réponse de disjoncteurs thermiques.

Des contacteurs ou des disjoncteurs K_{L1} ... K_{LN} permettent de limiter les courants sortants I_{L1} ... I_{LN} distribués vers les charges L₁ ... L_{N}.

De façon optionnelle, un ou plusieurs contacteurs K_{J} permettent de modifier de façon dynamique la répartition des différentes charges alimentées par les génératrices G₁ et G₂.

Si on considère, par exemple, un court-circuit localisé dans une branche de ladite armoire 10 alimentée par la génératrice G₁, entre ledit contacteur K₁ et lesdits disjoncteurs K_{L1}, K_{L2} ... K_{Li}. Le courant I₁ est alors au moins égal au courant de court-circuit caractérisant cette génératrice G₁. Le contacteur K₁ est dimensionné pour permettre le passage d'un courant maximal I₁ au moins égal à la somme des valeurs maximales des courants I_{L1}, I_{L2}...I_{Li} des différentes charges L₁, L₂ ...L₁ alimentées par cette génératrice G₁.

Si cette valeur maximale de I₁ est par exemple égale à 500 A, les caractéristiques d'une loi de protection correspondant par exemple à un disjoncteur conventionnel sont telles que le déclenchement de K₁ ne se produit que pour un courant nettement supérieur, par exemple égal à 2000 A. Par
conséquent, les liaisons et les barres de distribution localisées entre le contacteur K₁ d'une part et les disjoncteurs K_{L1}, K_{L2},...K_{Li} d'autre part doivent être dimensionnées afin de permettre le passage d'un tel courant de 2000 A.

Plusieurs inconvénients résultent d'un tel dimensionnement : Il y a notamment un surcoût par rapport à des éléments dimensionnés pour une valeur maximale de I₁, et une augmentation du poids qui peut s'avérer pénalisante, notamment dans le cas d'une armoire de distribution embarquée à bord d'un aéronef.

La présente invention a pour objectif de pallier de tels inconvénients.

Un document de l'art connu, le brevet US 4 862 308, décrit un système de protection et de détection d'erreurs sur une zone prédéfinie d'un bus de puissance comportant au moins une phase. Des lignes d'alimentation en puissance sont couplées à cette zone du bus de puissance par des disjoncteurs. Des transformateurs de courant sont utilisés pour détecter le courant qui circule dans chaque phase de chacune de ces lignes d'alimentation. Un détecteur d'erreur génère un signal de déclenchement qui commande les disjoncteurs pour qu'ils déconnectent les lignes d'alimentation du bus de puissance lorsqu'une erreur est détectée dans la zone prédéfinie de ce bus.

### EXPOSÉ DE L'INVENTION

La présente invention concerne un dispositif de protection contre les surintensités dans une armoire de distribution d'énergie électrique d'un aéronef, qui reçoit de l'énergie électrique fournie par au moins une génératrice entrainée par un moteur de cet aéronef et qui répartit cette énergie vers au moins deux charges au moyen de lignes et de barres internes à cette armoire, comportant
- des moyens de commutation,
- des moyens de mesure de chacun des différents courants entrant et sortant de ladite armoire, caractérisé en ce qu'il comporte :
- des premiers moyens de calcul d'au moins un harmonique de chacun des courants entrant et sortant de ladite armoire,
- des seconds moyens de calcul de la valeur absolue de la différence entre au moins un courant entrant dans ladite armoire et au moins un courant correspondant sortant de ladite armoire, pour au moins un harmonique de ces courants,
- des moyens de comparaison qui commandent l'ouverture des moyens de commutation si cette valeur absolue est supérieure à un seuil prédéterminé.

Dans un premier mode de réalisation, ledit dispositif comporte :
- des moyens de mesure de chacun des différents courants entrant et sortant de ladite armoire,
- des premiers moyens de calcul d'au moins un harmonique de chacun desdits courants.

Dans une première variante les seconds moyens de calcul effectuent la différence entre le courant issu d'une génératrice, entrant dans l'armoire, et la somme des courants sortant de cette armoire correspondant aux charges alimentées par cette génératrice, pour au moins un harmonique de ces courants.

Dans une seconde variante les seconds moyens de calculs effectuent la différence entre l'ensemble des courants entrant dans l'armoire et l'ensemble des courants sortant de l'armoire, pour au moins un harmonique de ces courants.

La mesure de la valeur des courants ainsi que les différents calculs peuvent être effectués de façon cyclique, avec une fréquence d'échantillonnage donnée. Cette fréquence d'échantillonnage est avantageusement supérieure d'un facteur 10 à la fréquence du fondamental d'un courant fourni par une génératrice. La commande des moyens de commutation peut n'être déclenchée que si une condition de court-circuit est vérifiée pendant un nombre de périodes d'échantillonnage supérieur à une valeur seuil.

Les mesures de courant peuvent être effectuées sur chacune des phases des connexions électriques.

Avantageusement les moyens de commutation comprennent au moins un contacteur.

Les premiers moyens de calcul peuvent réaliser un calcul sur l'harmonique fondamental de chacun des courants, ou sur la somme de l'harmonique fondamental et de quelques harmoniques de rangs les moins élevés de chacun des courants ou sur un ou plusieurs harmoniques de rang choisi parmi les rangs les moins élevés de chacun des courants.

Dans un second mode de réalisation le dispositif de l'invention comprend des modules d'acquisition, dans lesquels on mesure le courant, et au moins un bus de communication numérique pour la transmission d'informations entre ces modules et les moyens de calcul.

Chaque bus de communication numérique peut être un bus CAN. Les modules d'acquisition peuvent être situés à proximité des liaisons électriques.

Avantageusement, un module d'acquisition comporte successivement un filtre passe-bas, un échantillonneur-bloqueur, un module de quantification et un module de transformation de Fourrier discrète. Avantageusement, dans les moyens de calcul la valeur absolue de la différence entre le(s) courant(s) entrant et le(s) courant(s) sortant est filtrée temporellement.

Le dispositif de l'invention peut, avantageusement, être utilisé dans le "coeur électrique" d'un aéronef.

L'invention concerne également un procédé de protection contre les surintensités dans une armoire de distribution d'énergie électrique d'un aéronef, qui reçoit de l'énergie électrique fournie par au moins une génératrice entrainée par un moteur de cet aéronef et qui répartit cette énergie vers au moins deux charges au moyen de lignes et de barres internes à cette armoire, comportant les étapes suivantes :
- une étape de commutation,
- une étape de mesure de chacun des différents courants entrant et sortant de ladite armoire,
- une étape de calcul d'au moins un harmonique de chacun desdits courants,
- une étape de calcul de la valeur absolue de la différence entre au moins un courant entrant dans ladite armoire et au moins un courant sortant correspondant sortant de ladite armoire, pour au moins un harmonique de ces courants,
- une étape de comparaison de cette valeur absolue à un seuil prédéterminé et de commande de moyens de commutation si cette valeur absolue est supérieure à ce seuil.

Dans l'étape de calcul, on peut effectuer la différence entre le courant issu d'une génératrice, entrant dans l'armoire, et la somme des courants sortant de cette armoire correspondant aux charges alimentées par cette génératrice, pour au moins un harmonique de ces courants.

Dans l'étape de calcul, on peut effectuer la différence entre l'ensemble des courants entrant dans l'armoire et l'ensemble des courants sortant de l'armoire, pour au moins un harmonique de ces courants.

La mesure de la valeur des courants ainsi que les différents calculs peuvent être effectués de façon cyclique, avec une fréquence d'échantillonnage donnée.

### BRÈVE DESCRIPTION DES DESSINS

La figure 1 illustre une armoire de distribution d'énergie électrique de l'art connu.
La figure 2 illustre un premier mode de réalisation du dispositif de protection contre les surintensités dans une armoire de distribution d'énergie électrique, selon l'invention.
La figure 3 illustre un second mode de réalisation du dispositif de l'invention.
La figure 4 illustre un mode de réalisation d'un module d'acquisition du second mode de réalisation du dispositif de l'invention illustré sur la figure 3.

### EXPOSÉ DÉTAILLÉ DE MODES DE RÉALISATION

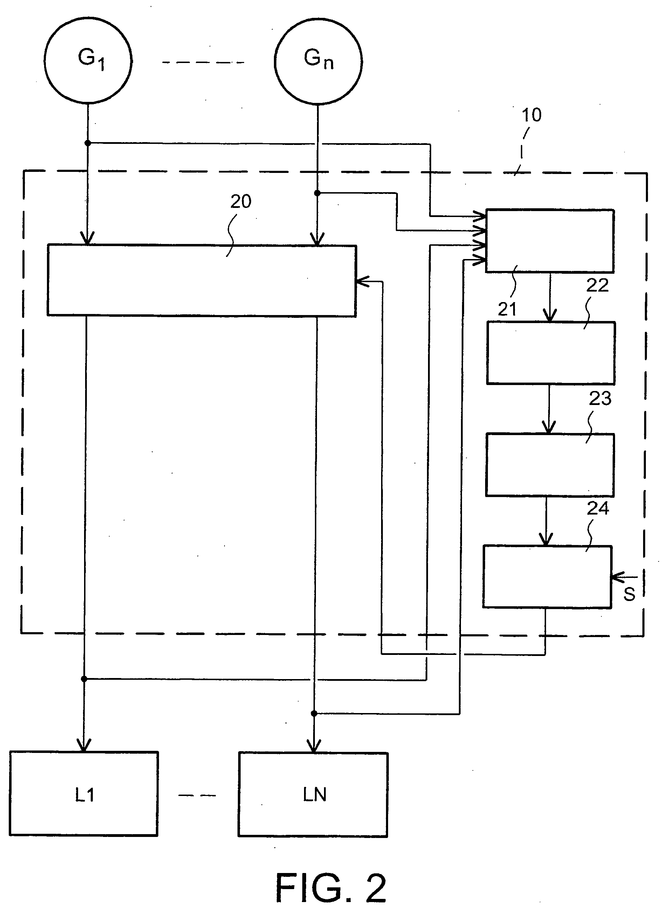

Comme illustré sur la figure 2, un premier mode de réalisation du dispositif de protection contre les surintensités dans une armoire de distribution d'énergie électrique, selon l'invention, qui reçoit de l'énergie électrique 10 fournie par au moins une génératrice Gᵢ, par exemple les génératrices G₁ et G₂ de la figure 1, et qui répartit cette énergie vers au moins deux charges Lᵢ, par exemple les charges L₁ à Lᵢ de la figure 1, comporte :
- des moyens de commutation 20, par exemple au moins un contacteur Kᵢ,
- des moyens 21 de mesure de chacun des différents courants entrant et sortant de ladite armoire 10, par exemple les courants I₁, I₂, I_{L1} à I_{LN}, illustrés sur la figure 1,
- des premiers moyens de calcul 22 d'au moins un harmonique de chacun desdits courants en tenant compte tant de l'amplitude que de la phase,
- des seconds moyens de calcul 23 de la valeur absolue de la différence entre au moins un courant entrant et au moins un courant sortant correspondant, en tenant compte tant de l'amplitude que de la phase, pour au moins un harmonique de ces courants, par exemple la différence |I₁ⱼ - (I_{L1j} + I_{L2j}+ ...)|, pour l'harmonique de rang j;
- des moyens 24 de comparaison de cette valeur absolue à un seuil prédéterminé S permettant de réaliser la commande d'ouverture des moyens de commutation.

Les premiers moyens de calcul 22 peuvent ainsi réaliser une transformée de Fourrier (FFT), par exemple au moyen d'un microcontrôleur ou d'un DSP (processeur de signaux numériques).

Dans la suite de la description, on met en oeuvre le dispositif de l'invention dans le cadre de l'exemple illustré sur la figure 1.

Ainsi l'ouverture du contacteur K₁ est commandée de façon à intervenir lorsque le courant I₁ est supérieur d'une marge prédéterminée à la somme des courants I_{Ll} à I_{Li}, correspondant aux différentes charges alimentées par la génératrice G₁.

En effet, d'après la loi des noeuds, en l'absence de court-circuit à l'intérieur de l'armoire 10, le courant entrant I₁ doit être égal à la somme des courants sortants.

Le fait que I₁ soit supérieur d'une marge prédéterminée à la somme des courants I_{L1}, I_{L2}, ... I_{Li} est donc représentatif de la présence d'un court-circuit, par exemple à la masse ou entre phases, à l'intérieur de ladite armoire 10.

La génératrice G₁ fournissant un courant alternatif dont la fréquence peut être fixe ou variable, ladite somme desdits courants doit être calculée en considérant tant l'amplitude que la phase de ceux-ci. Une telle sommation peut nécessiter une puissance de calcul très importante, d'autant plus que lesdits courants comportent des harmoniques de rang élevé. Cette puissance de calcul nécessaire peut s'avérer plus élevée que celle que permettent les moyens usuels microcontrôleurs, DSP etc.

Il faut remarquer que la loi des noeuds s'applique à chaque harmonique desdits courants. Ainsi, pour l'harmonique de rang j, en l'absence de court-circuit, le courant Iⱼ, doit être égal à la somme des courants I_{Llj}, I_{L2j}, ... I_{Lij}

Dans le cas où un court-circuit se produit à l'intérieur de l'armoire 10, le courant de court-circuit comporte généralement une composante fondamentale représentant une puissance plus importante que la puissance liée à des harmoniques de rang élevé. En conséquence, l'invention consiste à calculer ladite différence desdits courants pour un harmonique, par exemple l'harmonique fondamental ou quelques harmoniques tels que l'harmonique fondamental et quelques harmoniques de rangs les moins élevés, ou seulement quelques harmoniques de rang choisi parmi les rangs les moins élevés.

Si la valeur absolue de la différence, calculée par les seconds moyens de calcul 23, est supérieure à un seuil prédéterminé S, on considère qu'il y a un court-circuit à l'intérieur de ladite armoire électrique 10 et on commande l'ouverture des moyens de commutation 20, ici le contacteur K₁.

Ce calcul concerne, dans une première variante, la différence entre le courant issu d'une génératrice par exemple G₁, entrant dans ladite armoire 10, et la somme des courants sortant de ladite armoire, correspondant aux charges alimentées par cette génératrice, comme indiqué ci-dessus : |I₁ⱼ - (I_{Llj} + I_{L2j} .. +I_{Lij})|

Dans une seconde variante, on peut aussi calculer la valeur absolue de la différence entre l'ensemble des courants entrant et l'ensemble des courants sortant de l'armoire, soit : |Iₗⱼ+I₂ⱼ-(I_{Llj}+I_{L2j}+...+I_{LNj})|

Dans ce cas, si la valeur absolue de cette différence est supérieure à un seuil prédéterminé, on considère qu'il y a un court-circuit à l'intérieur de ladite armoire électrique 10 et on réalise la commande des moyens de commutation 20 : ici on ouvre les contacts K₁ et K₂.

En pratique, l'acquisition des valeurs des courants ainsi que ces différents calculs peuvent être effectués de façon cyclique, selon une fréquence d'échantillonnage suffisamment supérieure à la fréquence minimale imposée par le théorème de Shannon en fonction de la fréquence du fondamental du courant fourni par la génératrice considérée.

Ladite fréquence d'échantillonnage peut être, de préférence, choisie supérieure d'un facteur d'environ 10 à la fréquence dudit fondamental, soit sensiblement 10 kHz pour un fondamental dont l'ordre de grandeur est sensiblement voisin de 1 kHz. Ainsi, grâce à l'invention, ladite acquisition des mesures présente l'avantage d'être réalisée à une fréquence d'échantillonnage suffisamment basse (10 kHz) pour permettre sa mise en oeuvre avec les moyens existants (microcontrôleurs, etc.).

La commande d'ouverture des moyens de commutation peut n'être alors déclenchée que si la condition de court-circuit résultant des calculs exposés précédemment est vérifiée pendant un nombre de périodes d'échantillonnage consécutives supérieur à une valeur de seuil prédéterminée (correspondant par exemple à une durée de 50 à 100 ms).

Le dispositif selon l'invention permet de détecter tant des courts-circuits à la masse que des courts-circuits entre phases, les mesures de courant pouvant être effectuées distinctement sur chacune des phases.

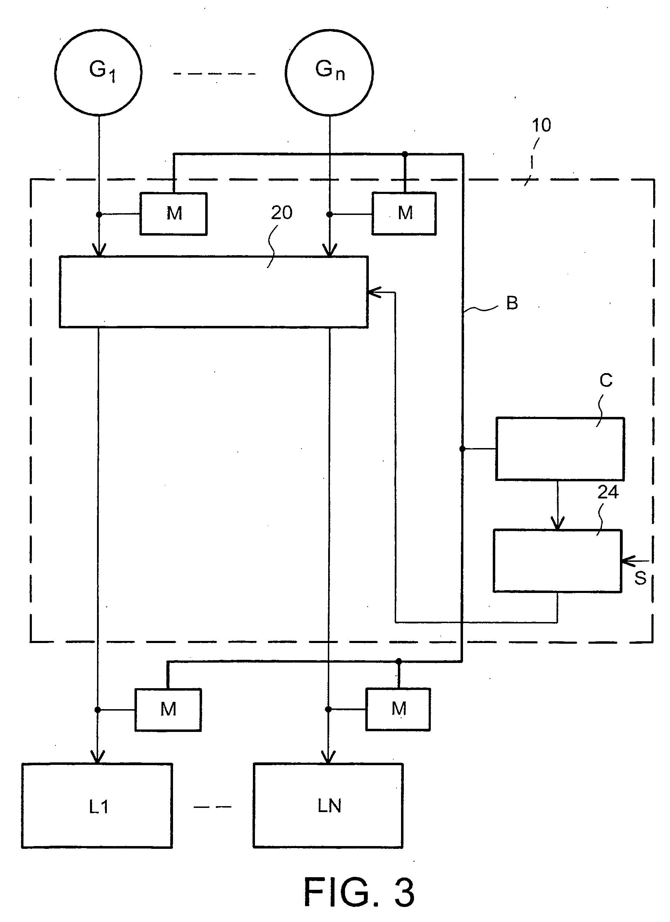

La figure 3 illustre un second mode de réalisation du dispositif de l'invention, dans lequel ledit dispositif comprend des modules d'acquisition M, dans lesquels on mesure le courant, au moins un bus de communication numérique B et des moyens de calculs C.

Le bus de communication numérique B peut être un bus CAN. Les modules d'acquisition M peuvent être situés à proximité des liaisons électriques.

Ce second mode de réalisation permet une réduction du câblage et par suite une diminution du poids et de l'encombrement, ce qui est très avantageux notamment lorsque l'armoire électrique est embarquée à bord d'un aéronef.

Le dispositif selon l'invention est particulièrement adapté à une telle utilisation d'un bus de communication numérique B pour la transmission des informations relatives aux mesures de courant. En effet, dans le cas d'une transmission par bus, les mesures sont numérisées au niveau de chaque module d'acquisition M, leur acquisition se faisant selon une fréquence d'échantillonnage déterminée.

Les mesures relatives aux différents modules d'acquisition M ne sont généralement pas synchrones. Un calcul qui serait réalisé par les moyens de calcul C en utilisant les mesures instantanées provenant desdits différents modules M serait donc erroné.

Dans ce second mode de réalisation, la mise en oeuvre des calculs suivante est particulièrement avantageuse.

Chaque module d'acquisition M effectue l'acquisition d'une mesure de courant puis traite ladite mesure de courant de façon à déterminer le (s) premier(s) harmoniques du signal.

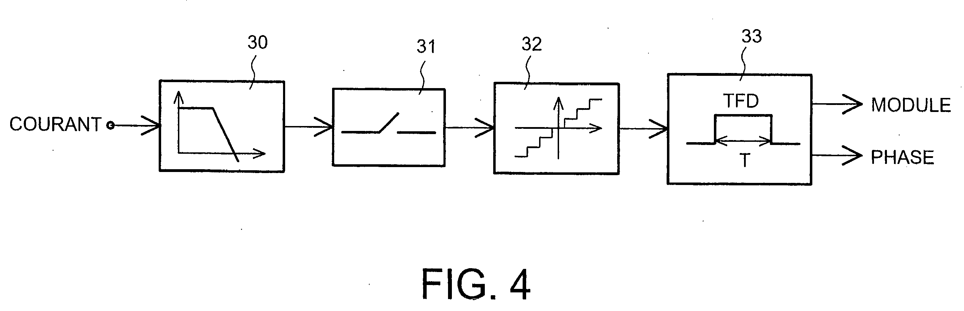

Comme illustré sur la figure 4, le signal mesuré peut être alors filtré au moyen d'un filtre passe-bas 30 prévu pour laisser passer lesdits premiers harmoniques dont on souhaite effectuer l'acquisition. Ce filtre passe-bas 30 permet d'assurer une fonction d'anti-repliement du spectre du signal.

Le signal de sortie de ce filtre passe-bas 30 est échantillonné dans un échantillonneur-bloqueur 31 puis numérisé dans un module de quantification 32, un module 33 de transformation de Fourrier discrète (TFD) applique une transformée TFD au signal ainsi numérisé afin de déterminer lesdits premiers harmoniques.

Le fait de n'utiliser qu'un nombre restreint d'harmoniques permet d'acquérir un signal de fréquence relativement basse (de l'ordre de quelques kilohertz) ce qui présente l'avantage de ne nécessiter, pour la réalisation de chaque module d'acquisition M, que l'utilisation d'un processeur (microcontrôleur, DSP ou "digital Signal Processor", etc.) dont la puissance de calcul est suffisamment modérée pour permettre l'utilisation d'un modèle de processeur facilement disponible dans le commerce.

Les valeurs correspondant auxdits harmoniques sont transmises par chaque module d'acquisition M vers les moyens de calcul C par l'intermédiaire d'au moins un bus de communication numérique B. Ces moyens de calcul C calculent la valeur absolue de la différence entre le(s) courant(s) entrant(s) et le (s) courant(s) sortant(s) de la même façon que les moyens de calcul 23 dans le premier mode de réalisation de l'invention.

Cette valeur absolue de la différence entres le(s) courant(s) entrant et le(s) courant(s) sortant peut être filtrée temporellement afin de tenir compte des délais de transmission des informations sur le bus de communication numérique B. En effet, ces délais peuvent parfois être importants, par exemple de l'ordre de 10ms entre deux envois consécutifs d'informations par un même module M (correspondant au rafraîchissement desdites informations, la période de l'harmonique de rang 1 étant par exemple de 1ms), et peuvent avoir pour conséquence une augmentation momentanée de la valeur absolue de ladite différence lorsque le courant varie dans l'une des charges raccordées à l'armoire électrique considérée.

Ainsi, dans le cas de l'augmentation du courant dans une charge, si un module M1 associé à cette charge envoie ses informations à un instant t₁ sur le bus, alors qu'un module M2 correspondant à la mesure d'un courant entrant envoie ses informations à un instant t₂ = t₁ + Δt, les moyens de calcul C vont disposer de mesures tenant compte de ladite augmentation de courant à partir de l'instant t₁ pour le courant dans la charge et à partir de l'instant t₂ pour ledit courant entrant dans l'armoire électrique. Par conséquent, pendant la durée Δt entre lesdits instants t₁ et t₂ ladite valeur absolue de la différence des courants subit une augmentation sans que cela corresponde à un défaut dans l'armoire électrique.

Le filtrage temporel précité de la différence des courants permet de s'affranchir d'un tel phénomène.

La constante de temps de ce filtrage peut être adaptée à la fréquence de rafraîchissement des informations par les modules d'acquisition M sur le bus de communication B.

Dans un mode de réalisation avantageux des moyens de calcul C, si un des modules d'acquisition M détecte une panne le concernant (défaut capteur, etc...) ou si lesdits moyens de calcul C détectent une panne concernant ce module d'acquisition M (problème de communication, etc...), ces moyens de calcul considèrent qu'ils ne peuvent plus calculer ladite différence des courants et inhibent par conséquent leur fonction de commande de moyens de commutation.

Il faut préciser que la fréquence des différents courants entrant et/ou sortant de l'armoire électrique peut être variable. Les fréquences desdits premiers harmoniques peuvent donc être elles aussi variables.

## Revendications

1. Dispositif de protection contre les surintensités dans une armoire de distribution d'énergie électrique (10) d'un aéronef, qui reçoit de l'énergie électrique fournie par au moins une génératrice (Gi) entrainée par un moteur de cet aéronef et qui répartit cette énergie vers au moins deux charges (Li) au moyen de lignes et de barres internes à cette armoire, comportant
- des moyens de commutation (20),
- des moyens (21, M) de mesure de chacun des différents courants entrant et sortant de ladite armoire, **caractérisé en ce qu'**il comporte :
- des premiers moyens (22) de calcul d'au moins un harmonique de chacun des courants entrant et sortant de ladite armoire,
- des seconds moyens (23 ; C) de calcul de la valeur absolue de la différence entre au moins un courant entrant dans ladite armoire et au moins un courant correspondant sortant de ladite armoire, pour au moins un harmonique de ces courants,
- des moyens de comparaison (24) qui commandent l'ouverture des moyens de commutation (20) si cette valeur absolue est supérieure à un seuil prédéterminé (S).

2. Dispositif selon la revendication 1, dans lequel les seconds moyens de calcul (23) effectuent la différence entre le courant issu d'une génératrice, entrant dans l'armoire (10), et la somme des courants sortant de cette armoire (10) correspondant aux charges alimentées par cette génératrice, pour au moins un harmonique de ces courants.

3. Dispositif selon la revendication 1, dans lequel les seconds moyens de calcul (23) effectuent la différence entre l'ensemble des courants entrant dans l'armoire (10) et l'ensemble des courants sortant de l'armoire (10), pour au moins un harmonique de ces courants.

4. Dispositif selon l'une quelconque des revendications 1 à 3, dans lequel la mesure de la valeur des courants ainsi que les différents calculs sont effectués de façon cyclique, avec une fréquence d'échantillonnage donnée.

5. Dispositif selon la revendication 4, dans lequel la fréquence d'échantillonnage est supérieure d'un facteur 10 à la fréquence du fondamental du courant fourni par une génératrice.

6. Dispositif selon l'une quelconque des revendications 4 et 5, dans lequel la commande des moyens de commutation n'est déclenchée que si une condition de court-circuit est vérifiée pendant un nombre de périodes d'échantillonnage supérieur à un seuil.

7. Dispositif selon la revendication 1, dans lequel les mesures de courant sont effectuées sur chacune des phases.

8. Dispositif selon l'une quelconque des revendications 1 à 7, dans lequel les moyens de commutation comprennent au moins un contacteur.

9. Dispositif selon l'une quelconque des revendications 1 à 8, dans lequel les seconds moyens de calcul (23) réalisent un calcul sur l'harmonique fondamental de chacun des courants.

10. Dispositif selon l'une quelconque des revendications 1 à 8, dans lequel les seconds moyens de calcul (23) réalisent un calcul sur la somme de l'harmonique fondamental et de quelques harmoniques de rangs les moins élevés de chacun des courants.

11. Dispositif selon l'une quelconque des revendications 1 à 8, dans lequel les premiers moyens de calcul (22) réalisent un calcul sur un ou plusieurs harmoniques de rang choisi parmi les rangs les moins élevés de chacun des courants.

12. Dispositif selon la revendication 1 comprenant des modules d'acquisition (M), dans lesquels, on mesure le courant, et au moins un bus de communication numérique (B) pour la transmission d'informations entre ces modules (M) et les moyens de calcul (C).

13. Dispositif selon la revendication 12, dans lequel chaque bus de communication numérique (B) est un bus CAN.

14. Dispositif selon l'une quelconque des revendications 12 et 13, dans lequel les modules d'acquisition (M) sont situés à proximité des liaisons électriques.

15. Dispositif selon l'une quelconque des revendications 12 à 14, dans lequel un module d'acquisition (M) comporte successivement un filtre passe-bas (30), un échantillonneur-bloqueur (31), un module de quantification (32) et un module (33) de transformation de Fourrier discrète.

16. Dispositif selon l'une quelconque des revendications 12 à 15, dans lequel, dans les moyens de calcul (C) la valeur absolue de la différence entre le(s) courant(s) entrant et les(s) courant(s) sortant est filtrée temporellement.

17. Utilisation du dispositif selon l'une quelconque des revendications précédentes dans le "coeur électrique" d'un aéronef.

18. Procédé de protection contre les surintensités dans une armoire de distribution d'énergie électrique (10) d'un aéronef, qui reçoit de l'énergie électrique fournie par au moins une génératrice (Gi) entrainée par un moteur de cet aéronef et qui répartit cette énergie vers au moins deux charges (Li) au moyen de lignes et de barres internes à cette armoire, comportant les étapes suivantes :
- une étape de commutation,
- une étape de mesure de chacun des différents courants entrant et sortant de ladite armoire,
- une étape de calcul d'au moins un harmonique de chacun desdits courants,
- une étape de calcul de la valeur absolue de la différence entre au moins un courant entrant dans ladite armoire et au moins un courant sortant correspondant sortant de ladite armoire, pour au moins un harmonique de ces courants,
- une étape de comparaison de cette valeur absolue à un seuil prédéterminé (S) et de commande de moyens de commutation (20)si cette valeur absolue est supérieure à ce seuil.

19. Procédé selon la revendication 18, dans lequel, dans l'étape de calcul, on effectue la différence entre le courant issu d'une génératrice, entrant dans l'armoire, et la somme des courants sortant de cette armoire correspondant aux charges alimentées par cette génératrice, pour au moins un harmonique de ces courants.

20. Procédé selon la revendication 18, dans lequel, dans l'étape de calcul, on effectue la différence entre l'ensemble des courants entrant dans l'armoire (10) et l'ensemble des courants sortant de l'armoire (10), pour au moins un harmonique de ces courants.

21. Procédé selon la revendication 18, dans lequel la mesure de la valeur des courants ainsi que les différents calculs sont effectués de façon cyclique, avec une fréquence d'échantillonnage donnée.

## Patentansprüche

1. Vorrichtung zum Überstromschutz in einem elektrischen Energieverteilungsschrank (10) in einem Luftfahrzeug, welcher elektrische Energie empfängt, die von mindestens einem Generator (Gᵢ) geliefert wird, der von einem Motor dieses Luftfahrzeugs betrieben wird, und welcher diese Energie auf mindestens zwei Ladungen (Lᵢ) mittels interner Leitungen und Schienen in diesem Schrank aufteilt, umfassend
- Schaltmittel (20),
- Mittel (21, M) zur Messung jedes der verschiedenen Ströme, die in den Schrank eintreten und aus diesem austreten,
**dadurch gekennzeichnet, dass** diese umfasst:
- erste Mittel (22) zur Berechnung mindestens einer Harmonischen jedes der Ströme, die in den Schrank eintreten und aus diesem austreten,
- zweite Mittel (23; C) zur Berechnung des Absolutwerts der Differenz zwischen mindestens einem Strom, der in den Schrank eintritt, und mindestens einem entsprechenden Strom, der aus dem Schrank austritt, für mindestens eine Harmonische dieser Ströme,
- Vergleichsmittel (24), welche die Öffnung der Schaltmittel (20) steuern, wenn dieser Absolutwert über einer vorherbestimmten Schwelle (S) liegt.

2. Vorrichtung nach Anspruch 1,
wobei die zweiten Rechenmittel (23) die Differenz zwischen dem von einem Generator ausgegebenen Strom, der in den Schrank (10) eintritt, und der Summe der Ströme, die aus diesem Schrank (10) austreten, entsprechend den von diesem Generator gespeisten Ladungen, für mindestens eine Harmonische dieser Ströme berechnen.

3. Vorrichtung nach Anspruch 1,
wobei die zweiten Rechenmittel (23) die Differenz zwischen der Gesamtheit der Ströme, die in den Schrank (10) eintreten, und der Gesamtheit der Ströme, die aus dem Schrank (10) austreten, für mindestens eine Harmonische dieser Ströme berechnen.

4. Vorrichtung nach einem der Ansprüche 1 bis 3,
wobei die Messung des Werts der Ströme sowie die verschiedenen Berechnungen zyklisch mit einer gegebenen Abtastfrequenz durchgeführt werden.

5. Vorrichtung nach Anspruch 4,
wobei die Abtastfrequenz über einem Faktor 10 der Grundfrequenz des von dem Generator gelieferten Stroms liegt.

6. Vorrichtung nach einem der Ansprüche 4 und 5,
wobei die Steuerung der Steuermittel nur ausgelöst wird, wenn ein Zustand eines Kurzschlusses während einer Anzahl von Abtastperioden über einer Schwelle verifiziert wird.

7. Vorrichtung nach Anspruch 1,
wobei die Strommessungen in jeder der Phasen durchgeführt werden.

8. Vorrichtung nach einem der Ansprüche 1 bis 7,
wobei die Steuermittel mindestens einen Schalter umfassen.

9. Vorrichtung nach einem der Ansprüche 1 bis 8,
wobei die zweiten Rechenmittel (23) eine Berechnung der Grundharmonischen jedes der Ströme vornehmen.

10. Vorrichtung nach einem der Ansprüche 1 bis 8,
wobei die zweiten Rechenmittel (23) eine Berechnung der Summe der Grundharmonischen und einiger Harmonischen der am wenigsten hohen Ordnungen jedes der Ströme vornehmen.

11. Vorrichtung nach einem der Ansprüche 1 bis 8,
wobei die ersten Rechenmittel (22) eine Berechnung einer oder mehrerer Harmonischen mit einer Ordnung vornehmen, die aus den am wenigsten hohen Ordnungen jedes der Ströme ausgewählt ist.

12. Vorrichtung nach Anspruch 1,
umfassend Erfassungsmodule (M), in denen der Strom gemessen wird, und mindestens einen numerischen Kommunikationsbus (B) zur Transmission von Information zwischen diesen Modulen (M) und den Rechenmitteln (C).

13. Vorrichtung nach Anspruch 12,
wobei jeder numerische Kommunikationsbus (B) ein CAN-Bus ist.

14. Vorrichtung nach einem der Ansprüche 12 und 13,
wobei die Erfassungsmodule (M) in der Nähe elektrischer Verbindungen angeordnet sind.

15. Vorrichtung nach einem der Ansprüche 12 bis 14,
wobei ein Erfassungsmodul (M) aufeinanderfolgend ein Tiefpassfilter (30), einen Abtastblockierer (31), ein Quantifizierungsmodul (32) und ein Modul (33) für eine diskrete Fourier-Transformation umfasst.

16. Vorrichtung nach einem der Ansprüche 12 bis 15,
wobei in den Rechenmitteln (C) der Absolutwert der Differenz zwischen dem (den) eintretenden Strom (Strömen) und dem (den) austretenden Strom (Strömen) zeitlich gefiltert wird.

17. Verwendung einer Vorrichtung nach einem der vorhergehenden Ansprüche in dem "elektrischen Kern" eines Luftfahrzeugs.

18. Verfahren zum Überstromschutz in einem elektrischen Energieverteilungsschrank (10) eines Luftfahrzeugs, welcher elektrische Energie empfängt, die von mindestens einem Generator (Gᵢ) geliefert wird, der von einem Motor dieses Luftfahrzeugs betrieben wird, und welcher diese Energie auf mindestens zwei Ladungen (Lᵢ) mittels interner Leitungen und Schienen in diesem Schrank aufteilt, umfassend die folgenden Schritte:
- einen Schaltschritt,
- einen Schritt zur Messung jedes der verschiedenen Ströme, die in den Schrank eintreten und aus diesem austreten,
- einen Schritt zur Berechnung mindestens einer Harmonischen jedes der Ströme,
- einen Schritt zur Berechnung des Absolutwerts der Differenz zwischen mindestens einem Strom, der in den Schrank eintritt, und mindestens einem entsprechenden Strom der aus dem Schrank austritt, für mindestens eine Harmonische dieser Ströme,
- einen Schritt zum Vergleich dieses Absolutwerts mit einer vorherbestimmten Schwelle (S) und zur Steuerung der Steuermittel (20), wenn dieser Absolutwert über dieser Schwelle liegt.

19. Verfahren nach Anspruch 18,
wobei in dem Rechenschritt die Differenz zwischen dem von einem Generator ausgegebenen Strom, der in den Schrank eintritt, und der Summe der Ströme, die aus diesem Schrank austreten, entsprechend den von diesem Generator gespeisten Ladungen, für mindestens eine Harmonische dieser Ströme berechnet wird.

20. Verfahren nach Anspruch 18,
wobei in dem Rechenschritt die Differenz zwischen der Gesamtheit der Ströme, die in den Schrank (10) eintreten, und der Gesamtheit der Ströme, die aus dem Schrank (10) austreten, für mindestens eine Harmonische dieser Ströme berechnet wird.

21. Verfahren nach Anspruch 18,
wobei die Messung des Werts der Ströme sowie die verschiedenen Berechnungen zyklisch mit einer gegebenen Abtastfrequenz durchgeführt werden.

## Claims

1. Device for protection against overcurrents in an aircraft electrical energy distribution cabinet (10), which receives electrical energy supplied by at least one generator (Gᵢ) driven by one engine of this aircraft and which distributes this energy to at least two loads (Lᵢ) by means of lines and bars within this cabinet, comprising:
- switching means (20),
- means (21; M) for measuring each of the different currents entering and leaving the said cabinet (10),
**characterized in that** it comprises:
- first calculating means (22) for at least one harmonic of each of the said currents entering and leaving the said cabinet,
- second means (23; C) for calculating the absolute value of the difference between at least one current entering the said cabinet and at least one corresponding current leaving the said cabinet, for at least one harmonic of these currents,
- comparison means (24) which control the opening of the switching means (20) if this absolute value is greater than a predetermined threshold (S).

2. Device according to claim 1, wherein the second calculating means (23) determine the difference between the current coming from a generator and entering the cabinet (10) and the sum of the currents leaving this cabinet (10) corresponding to the loads supplied by this generator, for at least one harmonic of these currents.

3. Device according to claim 1, wherein the second calculating means (23) determine the difference between the set of currents entering the cabinet (10) and the set of currents leaving the cabinet (10), for at least one harmonic of these currents.

4. Device according to any one of claims 1 to 3, wherein the measurement of the value of the currents as well as the different calculations are performed cyclically, with a given sampling frequency.

5. Device according to claim4, wherein the sampling frequency is greater by a factor of 10 than the frequency of the fundamental of the current supplied by a generator.

6. Device according to either of claims 4 and 5, wherein the control of the switching means is only tripped if a short circuit condition is verified during a number of sampling periods greater than a threshold.

7. Device according to claim 1, wherein the current measurements are performed on each of the phases.

8. Device according to any one of claims 1 to 7, wherein the switching means comprise at least one contactor.

9. Device according to any one of claims 1 to 8, wherein the second calculating means (23) perform a calculation on the fundamental harmonic of each of the currents.

10. Device according to any one of claims 1 to 8, wherein the second calculating means (23) perform a calculation on the sum of the fundamental harmonic and of several lowest-order harmonics of each of the currents.

11. Device according to any one of claims 1 to 8, wherein the first calculating means (22) perform a calculation on one or more harmonics of selected order chosen from among the lowest orders of each of the currents.

12. Device according to claim 1, comprising acquisition modules (M) wherein the current is measured, and at least one digital communication bus (B) for the transmission of information between these modules (M) and the calculating means (C).

13. Device according to claim 12, wherein each digital communication bus (B) is a CAN bus.

14. Device according to either of claims 12 and 13, wherein the acquisition modules (M) are situated near the electrical connections.

15. Device according to any one of claims 12 to 14, wherein an acquisition module (M) comprises in succession a low-pass filter (30), a sample-and-hold circuit (31), a quantising module (32), and a discrete Fourrier transform module (33).

16. Device according to any one of claims 12 to 15, wherein in the calculating means (C), the absolute value of the difference between the entering current(s) and the leaving current(s) is temporally filtered.

17. Use of the device according to any one of the preceding claims in the "electrical core" of an aircraft.

18. Method of protection against overcurrents in an aircraft electrical energy distribution cabinet (10) which receives electrical energy supplied by at least one generator (Gᵢ) driven by one engine of the aircraft and which distributes this energy to at least two loads (Lᵢ) by means of lines and bars within this cabinet comprising the following steps:
- a switching step;
- a step of measuring each of the different currents entering and leaving the said cabinet,
- a step of calculating at least one harmonic of each of the said currents,
- a step of calculation of the absolute value of the difference between at least one current entering the said cabinet and at least one corresponding current leaving the said cabinet, for at least one harmonic of these currents,
- a step of comparison of this absolute value with a predetermined threshold (S) and of control of switching means (20) if this absolute value is greater than this threshold.

19. Method according to claim 18, wherein in the calculation step, the difference is determined between the current coming from a generator and entering the cabinet, and the sum of the currents leaving this cabinet corresponding to the loads supplied by this generator, for at least one harmonic of these currents.

20. Method according to claim 18, wherein, in the calculation step, the difference is determined between the set of currents entering the cabinet (10) and the set of currents leaving the cabinet (10), for at least one harmonic of these currents.

21. Method according to claim 18, wherein the measurement of the value of the currents as well as the different calculations are performed cyclically, with a given sampling frequency.
